# FASCICULE DE BREVET EUROPEEN

(11) **EP 2 026 360 B1**
(45) Date de publication et mention de la délivrance du brevet: **23.02.2011**
(21) Numéro de dépôt: 08159728.8
(22) Date de dépôt: 04.07.2008
(51) Int. Cl.: H01C 7/02, C08L 67/02

(54) **Matériau à comportement CTP pour application moyenne et haute température, structures autorégulantes le comprenant et leur procédé de fabrication**
Material mit PTC-Verhalten zur Anwendung bei mittleren und hohen Temperaturen, dieses umfassende selbstregulierende Strukturen und deren Herstellungsverfahren
Material with PTC behaviour for medium- and high-temperature application, self-regulating structures comprising same and manufacturing method

(30) Priorité: 16.07.2007 FR 0705142
(43) Date de publication de la demande: 18.02.2009
(73) Titulaire: Acome Société Coopérative de Production, Société Anonyme, à capital variable, 75008 Paris (FR)
(72) Inventeur: Paul Bert, Philippe, 50140 Romagny (FR); Lagrève, Christian, 61100 La Chapelle Biche (FR); Fermin, Christian, 50600 Chèvreville (FR)
(74) Mandataire: Cabinet Plasseraud

(56) Documents cités:
- EP-A- 0 344 734
- EP-A- 0 880 302
- EP-B- 0 965 138

## Description

La présente invention porte sur un matériau à comportement CTP (Coefficient de Température Positif) entrant dans la fabrication de structures autorégulantes, sur lesdites structures autorégulantes et notamment un câble autorégulant, ainsi que sur leur procédé de fabrication.

Dans le cadre d'applications de mise hors gel et de maintien en température, on retrouve actuellement sur le marché des structures autorégulantes à base de polyoléfines ne fonctionnant qu'à de basses températures, de l'ordre de 60°C sous tension et 80°C hors tension. On retrouve également deux types de produits pouvant résister à des températures de sollicitation supérieures à 100°C. Tout d'abord, des produits à base d'alliages métalliques comme par exemple, des fils résistifs ou des câbles à puissance constante. Cependant, ceux-ci sont lourds et peuvent s'avérer difficiles à mettre en oeuvre. Par la suite, on retrouve des produits à base de matériaux polymères fluorés, tels que des matériaux à coefficient de température positif contenant du fluorure de vinyle (PVDF). Bien que ces derniers puissent fonctionner en continu à des températures d'environ 100 à 150°C sous tension et à des températures d'environ 130 à 190°C hors tension, ils sont fragiles, coûteux et peuvent même s'avérer toxiques en cas d'incendie.

Il existe aussi sur le marché des matériaux à comportement CTP dépourvus de matière fluorée ayant une tenue en température supérieure aux matériaux à base de polyoléfine (EP0965138). Ces matériaux, développés en 1997 par la Société déposante, peuvent fonctionner en continu à 80°C sous tension et à 100°C hors tension, grâce à une matrice à base de polyoléfine et de polyester soit un mélange ternaire contenant un copolymère éthylène acrylate de méthyle (EMA), un mélange noir de carbone dans une matrice de copolymère éthylène acrylate d'éthyle (EEA) et du téréphtalate de polybutylène (PBT, polybutylène téréphtalate). Cependant, le matériau développé en 1997 présente les inconvénients suivants :
- une limite des viscosités offertes par le PBT et par conséquent une limite quant aux géométries de structures pouvant être obtenues,
- une plage de température d'application limitée.

Enfin, il est connu de EP 0 344 734 A1 que les polymères élastomères thermoplastiques à base de polyester peuvent être utilisés dans des compositions à comportement CTP et auto-régulantes.

Il existe donc un besoin réel pour un matériau à comportement CTP dépourvu de matrice fluorée étant à la fois économique et simple dans sa mise en oeuvre, et présentant notamment les caractéristiques suivantes : une large plage de température de fonctionnement sous tension et hors tension, des températures de coupure variées, et une bonne stabilité au vieillissement.

La Société déposante, après de nombreuses recherches a eu le grand mérite de trouver un matériau présentant l'ensemble des propriétés souhaitées. Ledit matériau à comportement CTP entrant dans la fabrication de structures autorégulantes est un alliage de polymères compatibles caractérisé en ce qu'il comprend les pourcentages étant exprimés en poids total du matériau:
- de 5 à moins de 20% d'au moins une polyoléfine polaire,
- de 60 à 90% d'au moins un copolymère élastomère thermoplastique à base de polyester-ester ou de polyester-éther, et
- de 5 à 20% d'une charge conductrice,
ledit matériau étant dépourvu de composés fluorés.

Dans le cadre de la présente invention, l'expression « *alliage de polymères compatibles* » désigne un mélange d'au moins deux polymères qui sont non miscibles mais qui sont compatibles ou un mélange d'au moins deux polymères non miscibles et non compatibles. La mise en oeuvre d'un tel alliage de polymères compatibles par extrusion ou injection-moulage permet d'obtenir une structure composite.

Ladite polyoléfine polaire, éventuellement chargée totalement ou partiellement, est choisie dans le groupe comprenant les copolymères d'éthylène/acétate de vinyle chargés, les copolymères d'éthylène/acrylate d'alkyle en C₁-C₆ chargés, ou leurs mélanges, de préférence on utilise un copolymère d'éthylène/acrylate d'éthyle (EEA) ou un copolymère d'éthylène/acrylate de méthyle (EMA) ou leurs mélanges et plus préférentiellement, la polyoléfine polaire selon l'invention est un copolymère d'éthylène/acrylate d'éthyle (EEA) chargé avec du noir de carbone, la quantité de noir de carbone étant de préférence comprise entre environ 5 et 20%, du poids total du matériau. Par alkyle en C₁-C₆ on entend des molécules ayant la formule génerale CₙH₂ₙ₊₁ avec n = 1 à 6, tel que méthyle, éthyle, n-propyle, i-propyle, n-butyle, i-butyle, 1-méthyle-propyle, tert-butyle, pentyle et hexyle.

Ledit copolymère élastomère thermoplastique à base de polyester-ester ou de polyester-éther entrant dans la composition du matériau à comportement CTP est formé d'une succession de segments souples et rigides qui améliorent les propriétés physiques et chimiques du produit fini. Les segments rigides sont constitués par des segments ester d'une certaine longueur de chaîne, alors que les segments souples sont constitués quant à eux par des segments ester d'une autre longueur de chaîne ou bien par des segments éther. Dans la présente invention ledit copolymère élastomère thermoplastique à base de polyester-ester ou de polyester-éther entrant dans la composition du matériau à comportement CTP a une dureté Shore D comprise entre 25 et 82.

Des exemples de copolymère élastomère thermoplastique à base de polyester-ester ou de polyester-éther pouvant être utilisés dans la présente invention sont ceux connus sous les différents noms commerciaux : Riteflex^{®}, Arnitel^{®} Hytrel^{®}.

Le matériau à comportement CTP selon la présente invention présente une large plage de température de fonctionnement autant sous tension que hors tension, une température de coupure adaptable en fonction de la composition et de la concentration du copolymère élastomère thermoplastique (en effet, la nature et le taux des segments souples éther ou ester du polymère contribue à ajuster la pente de la puissance du produit fini en fonction de la température) avec une bonne stabilité au vieillissement.

De préférence, le matériau à comportement CTP selon la présente invention présente les caractéristiques suivantes :
- une plage de température de fonctionnement sous tension comprise entre -20°C à 150°C et hors tension comprise entre -20°C et 190°C (selon les grades de polyester-éther ou polyester-ester choisis),
- une température de coupure supérieure à 70°C de préférence d'environ 100 à 240°C,
- une bonne stabilité au vieillissement, et
- une bonne stabilité thermique permettant de conserver ses propriétés jusqu'à des températures de pointes de 190°C (en fonction du polyester choisi).

Ledit matériau de la présente invention entre dans la fabrication de structures autorégulantes, choisies dans le groupe comprenant un câble autorégulant, un tube chauffant et une résistance électrique variable en fonction de la température.

La présente invention porte également sur une structure autorégulante, notamment un câble, un tube chauffant, une résistance électrique variable en fonction de la température, caractérisée en ce qu'elle est composée dudit matériau selon la présente invention. En effet, la nature du matériau à comportement CTP selon l'invention permet de le soumettre à différents modes de transformation, notamment l'extrusion, l'injection, le moulage, etc..., pour en faire des structures de géométrie différente.

La présente invention porte également sur un câble autorégulant comprenant au moins deux conducteurs électriques autour desquels est extrudé le matériau selon l'invention décrit précédemment. De manière avantageuse, ces conducteurs sont parallèles entre eux et disposés longitudinalement dans le câble le long des deux bords opposés de celui-ci. Ces conducteurs sont maintenus en position par extrusion autour de ceux-ci d'un ruban à base du matériau selon l'invention décrit précédemment. Autour de ce ruban est ensuite extrudée une couche de matériau isolant, tel que le polypropylène ignifugé ou l'éthylène chlorotrifluoroéthylène. Un manchon constitué par une tresse métallique est disposé autour de la couche de matériau isolant. L'ensemble est protégé par une gaine externe isolante.

La présente invention porte également sur un procédé de fabrication d'une structure autorégulante, comprenant ledit matériau selon la présente invention, caractérisé en ce qu'il comprend les étapes dans lesquelles :
- on mélange à chaud, c'est-à-dire d'environ 220 à 280°C, les pourcentages étant exprimés en poids total du matériau
- de 5 à moins de 20% d'au moins une polyoléfine polaire,
- de 60 à 90% d'au moins un copolymère élastomère thermoplastique à base de polyester-ester ou de polyester-éther,
- de 5 à 20% d'une charge conductrice,
le tout dans une extrudeuse bi-vis ou un co-malaxeur Buss,
- on extrude le mélange homogène ainsi obtenu en joncs,
- on coupe les joncs formés afin d'obtenir des granulés, et
- on introduit les granulés dans une extrudeuse pour former la structure dans laquelle sont insérés au moins deux conducteurs électriques.

La présente invention porte en outre sur un procédé de fabrication d'un câble autorégulant, comprenant ledit matériau selon la présente invention, caractérisé en ce qu'il comprend les étapes dans lesquelles :
- on mélange à chaud, c'est-à-dire d'environ 220 à 280°C, les pourcentages étant exprimés en poids total du matériau
- de 5 à moins de 20% d'au moins une polyoléfine polaire,
- de 60 à 90% d'au moins un copolymère élastomère thermoplastique à base de polyester-ester ou de polyester-éther,
- de 5 à 20% d'une charge conductrice, le tout dans une extrudeuse bi-vis ou un co-malaxeur Buss,
- on extrude le mélange homogène ainsi obtenu en joncs,
- on coupe les joncs formés afin d'obtenir des granulés, et
- on introduit les granulés dans une extrudeuse pour former le câble dans lequel sont insérés au moins deux conducteurs électriques.

Les conducteurs électriques utilisés selon l'invention sont préférentiellement en cuivre nickelé ou en cuivre étamé et ont une section comprise entre 0,1 à 3 mm².

La mise en oeuvre est très simple car seulement deux matières sont nécessaires pour réaliser le matériau (compound) : la polyoléfine polaire chargée avec la charge conductrice et le copolymère élastomère thermoplastique. Cette simplicité de mise en oeuvre est d'ailleurs l'un des avantages que procure ledit matériau de l'invention. En effet, la polyoléfine polaire utilisée dans la présente invention étant un mélange maître avec une teneur en noir de carbone fixe, par exemple le LE7704^{®}, ceci facilite la mise en oeuvre lors du mélangeage avec le copolymère élastomère thermoplastique en évitant la manipulation du noir de carbone sous forme de poudre ou perle, permettant ainsi une meilleure dispersion du noir de carbone. Ce mélangeage sur une machine de type extrudeuse double vis permet à la présente invention d'avoir un mélange dit homogène apte à être extrudé sur une ligne d'extrusion.

Pour une composition donnée, la résistance électrique est notamment obtenue en fonction des paramètres de l'extrusion. L'homme du métier sait adapter ces paramètres d'extrusion à la résistance électrique souhaitée. En effet, la pente d'autorégulation est adaptable en fonction du choix du polyester et des paramètres d'extrusion. De façon tout à fait avantageuse, les présents inventeurs ont trouvé qu'il était possible par le choix d'une composition donnée, d'obtenir une gamme de produits présentant des résistances électriques différentes déterminées par des paramètres de mise en oeuvre bien définis, notamment d'extrusion, et dont les propriétés, notamment de puissance linéique, sont différentes, comme ceci ressort des exemples décrits ci-après.

D'autres aspects, objets, avantages et caractéristiques de l'invention, seront présentés à la lecture de la description non restrictive qui suit et qui décrit des modes de réalisation préférés de l'invention donnés par le biais d'exemples seulement par référence aux figures suivantes, sur lesquelles :
- la figure 1 représente la puissance linéique en fonction de la température de différents câbles autorégulants selon la présente invention,
- la figure 2 représente la puissance linéique en fonction de la température d'un câble autorégulant selon la présente invention et du câble autorégulant décrit dans le brevet EP0965138,
- la figure 2A représente la puissance linéique en fonction de la température de câbles autorégulants constitués de la même matrice polymère, mais ayant une résistance électrique différente à 20°C,
- la figure 2B représente la puissance linéique en fonction de la température de câbles autorégulants constitués de matrice polymère différente, mais ayant une résistance électrique identique à 20°C,
- la figure 2C représente la puissance linéique en fonction de la température de câbles antes constitués de matrice polymère identique et/ou différente, et ayant une résistance électrique identique et/ou différente à 20°C,
- la figure 3 représente de façon schématique un cycle thermique auquel seront soumis des câbles autorégulants pour un essai de vieillissement,
- la figure 4 représente les résultats de tests de vieillissement de deux câbles autorégulants,
- la figure 5 représente la température auto-générée par des câbles autorégulants selon la présente invention et des câbles de l'art antérieur.

### EXEMPLES

Dans les exemples qui suivent, les produits décrits ci-dessous sont utilisés :
- HYTREL^{®}: copolymères bloc commercialisés par la société Dupont. La dureté Shore de ces matériaux va de 35D à 104D.
- ARNITEL^{®}: copolymères bloc commercialisés par la société DSM Products. La dureté Shore de ces matériaux va de 38D à 74D.
- LE7704^{®}: polyoléfine polaire chargée commercialisée par la Société Boréalis qui est un mélange contenant 63% de EEA avec 37% de noir de carbone.
- VESTODUR^{®} 3000 : téréphtalate de polybutyléne commercialisé par la Société Degussa.
- 24MA005^{®} : copolymère éthylène/acrylate de méthyle de type 24 commercialisé par la Société Arkema.

### Exemple 1 : Préparation de l'alliage AR400 selon l'invention pour un câble autorégulant.

A l'aide d'une extrudeuse bi-vis, on prépare un mélange d'extrusion AR400 comprenant :
- 30% de LE7704^{®}
- 70% d'ARNITEL^{®} UM551V (dureté 55D, température de fusion 200°C)

- on mélange à chaud, c'est-à-dire à environ 240°C, les matériaux, le tout dans une extrudeuse bi-vis,
- on extrude le mélange homogène ainsi obtenu en joncs,
- on coupe les joncs formés afin d'obtenir des granulés, et
- on introduit les granulés dans une extrudeuse pour former un câble dans lequel sont insérés deux conducteurs électriques en cuivre nickelé de section de cuivre de 1,5 mm² .

Le câble ainsi obtenu (R_{AR400}) présente les caractéristiques suivantes :
- épaisseur languette : 1,5 mm
- largeur languette : 9,5 mm
- rapport de l'intensité du courant de démarrage sur l'intensité du courant nominal, à 10°C : 2,32
- résistance électrique à 20°C : 400 ohms

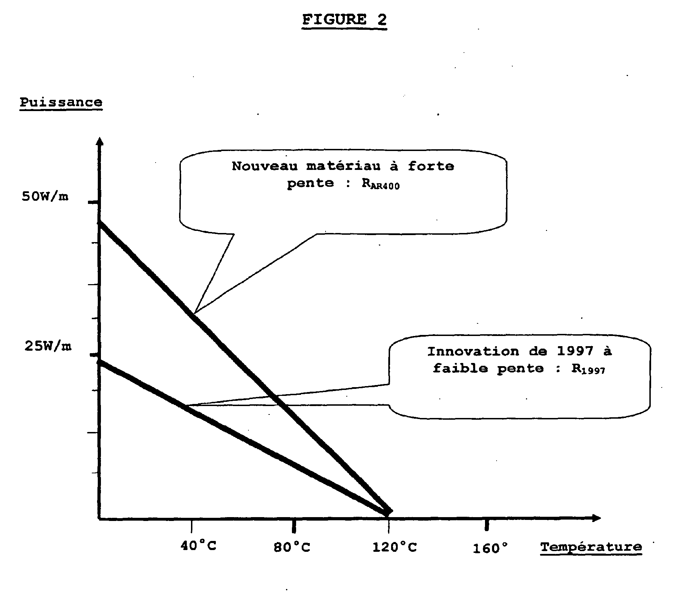

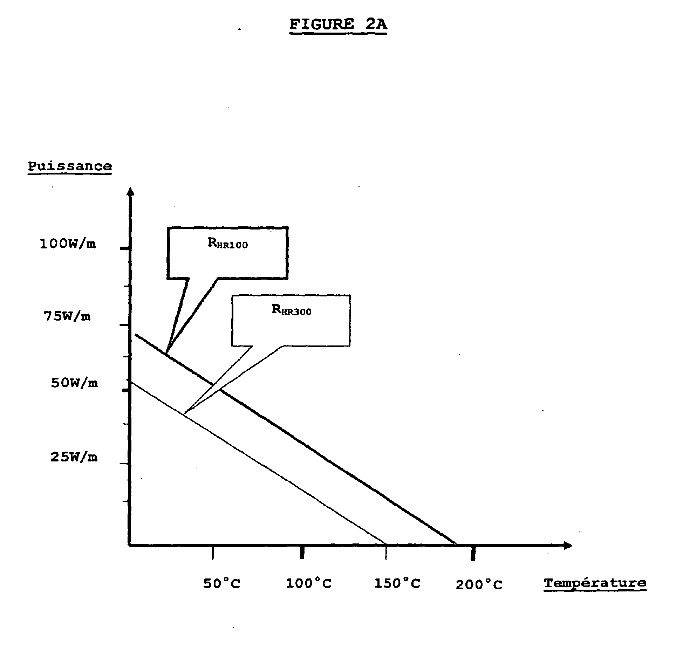

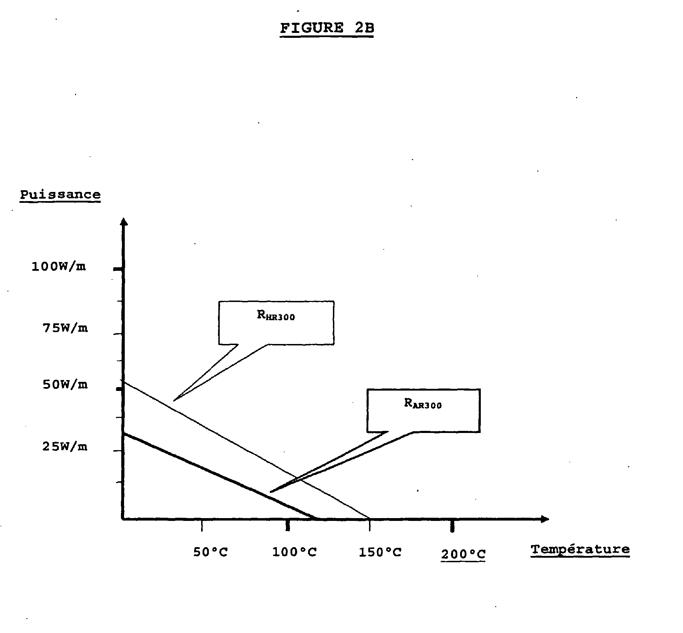

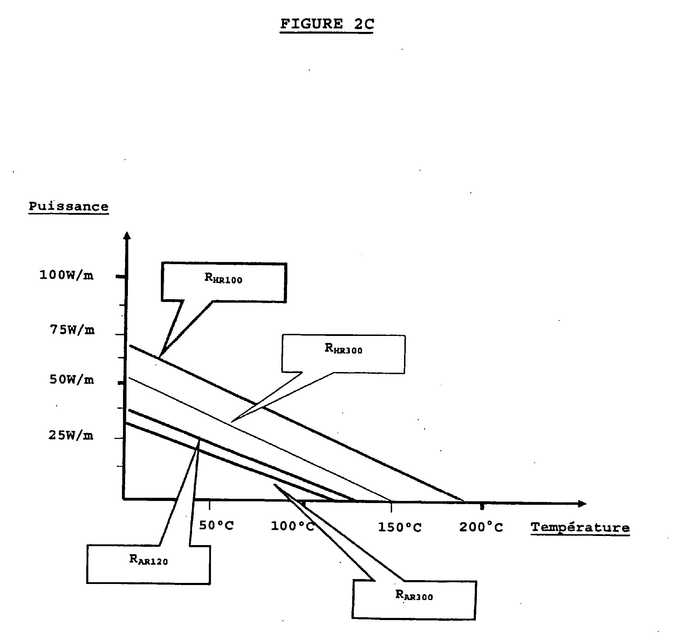

Ce câble à comportement CTP (R_{AR400}) peut être utilisé sous tension entre -20 et 150°C et hors tension de -20 à 190°C. Sa courbe de puissance linéique en fonction de la température est représentée sur la figure 2. Il conserve ses propriétés jusqu'à des températures de pointes de 190°C.

### Exemple 2: Préparation d'un alliage de polymères compatibles (VM1997) selon l'art antérieur (EP0965138) pour un câble autorégulant.

En suivant la procédure de l'exemple 1, on prépare un mélange d'extrusion présentant la composition suivante :
- 60% de VESTODUR^{®} 3000,
- 20% de 24MA005^{®}, et
- 20% de copolymère éthylène/acrylate d'éthyle chargé de 37% de noir de carbone vendu sous la marque LE7704^{®} par la Société BOREALIS.

Ce matériau (VM1997) est extrudé conformément à l'exemple 1.

Ce câble à comportement CTP (R_{VM1997}) peut être utilisé sous tension entre -20 et 80°C et hors tension de -20 à 100°C. Sa courbe de puissance linéique en fonction de la température est représentée sur la figure 2.

### Exemple 3: Préparation des alliages de polymères compatibles selon l'invention pour des câbles autorégulants.

On prépare plusieurs mélanges d'extrusion selon la procédure de l'exemple 1, en changeant la nature du copolymère élastomère thermoplastique. Ces mélanges d'extrusion présentent les caractéristiques données dans le tableau 1 ci-dessous.

Ces matériaux sont extrudés conformément à l'exemple 1, mais en adaptant les conditions de mise en oeuvre pour obtenir les résistances électriques telles que mentionnées dans le tableau 1.

**Tableau 1**

| **Alliage** | **CET** | **Dureté shore du CET** | **Température de fusion du CET (°C)** | **Résistance électrique à 20°C du câble (ohms)** |
|---|---|---|---|---|
| HR50 | H | 82D | 223 | 50 |
| HR100 | H | 82D | 223 | 100 |
| HR300 | H | 82D | 223 | 300 |
| HR350 | H | 82D | 223 | 350 |
| HR350-310 | H | 82D | 223 | 350 à 310 |
| AR120 | A | 55D | 200 | 120 |
| AR300 | A | 55D | 200 | 300 |
| HR1500 | H | 40D | 170 | 1500 |
| HR2000 | H | 40D | 170 | 2000 |

où CET = copolymère élastomère thermoplastique, H = Hytrel^{®}, A = Arnitel^{®}.

La dureté shore de la matrice polymère de base en polyester-ester ou en polyester-éther participe à sélectionner les performances du câble.

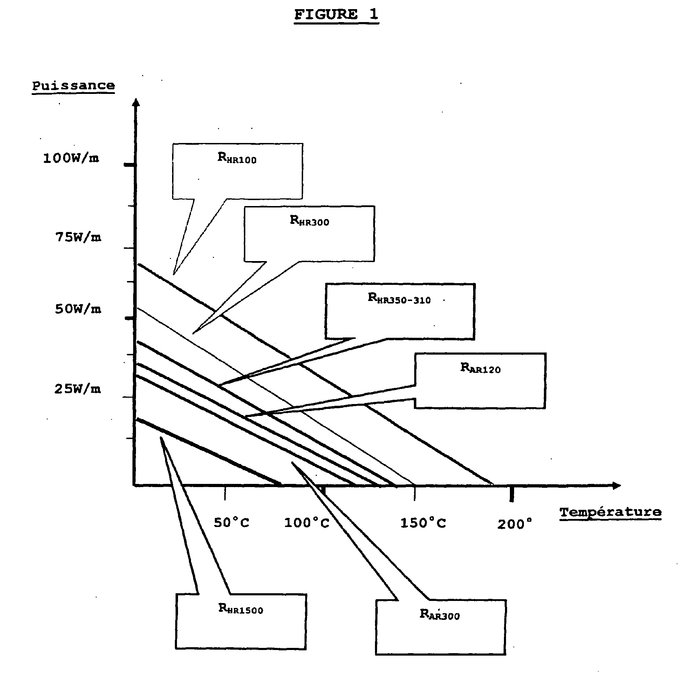

Les courbes de puissances de certains de ces alliages sont représentées sur la figure n°1. On note la diversité des résultats que l'on peut obtenir en fonction de la matrice, de la dureté shore et de la résistance électrique.

Tous ces câbles à comportement CTP sauf les R_{HR1500} et R_{HR2000} peuvent être utilisés sous tension entre -20 et 150°C et hors tension de -20 à 190°C. Ils conservent leurs propriétés jusqu'à des températures de pointes de 190°C.

Pour chaque câble on mesure la puissance linéique en fonction de la température. Les différents résultats sont représentés sur les figures 2, 2A, 2B et 2C. La figure 2 met en évidence l'apport de l'invention qui permet de toujours couper à 120°C tout en doublant la puissance du câble à 10°C. Les figures 2A et 2B démontrent respectivement qu'en modifiant la nature de la résistance électrique ou en modifiant la nature de la matrice polymère, on observe des variations de la puissance linéique en fonction de la température à 20°C. Particulièrement, en figure 2C, on remarque une faible variation de la puissance lorsque pour une même matrice on fait varier la résistance électrique (100 et 300 ohms), alors que l'on remarque une grande variation de puissance lorsqu'on modifie la nature de la matrice (Hytrel^{®} ou Arnitel^{®}), mais qu'on conserve une résistance électrique identique.

### Exemple 4 : Stabilité au vieillissement

On place le câble (R_{AR400}) obtenu à l'exemple 1 dans une étuve sous une tension de 230V durant 540 heures.

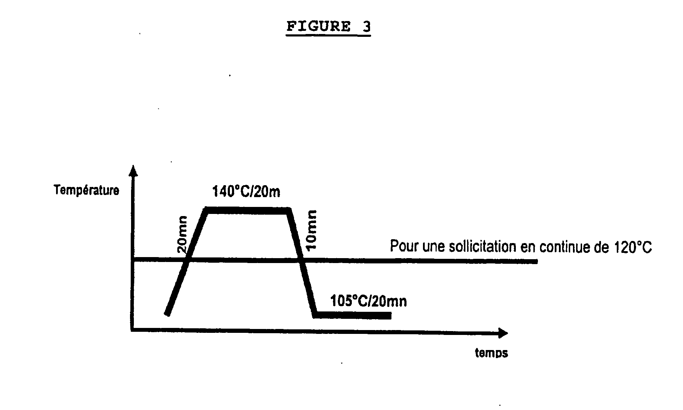

En faisant varier la température de manière cyclique, le cycle est caractérisé en ce que tout d'abord, on élève la température progressivement à 140°C, pour ensuite la maintenir stable à 140°C pendant 20 minutes puis la faire diminuer progressivement à 105°C en 10 minutes et maintenir cette température pendant 20 minutes et ainsi de suite pendant 540 heures. Le cycle est représenté sur la figure 3.

La plage de température balayée simule un fonctionnement accéléré à 120°C en continu.

On mesure la puissance avant (Pᵢ, au temps t=0) et après (P_{f}, au temps t=T) vieillissement du câble (R_{HR350}) et on calcule le rapport P_{f/}Pᵢ.

On procède aux mêmes mesures sur un câble à base de polymère fluoré (R_{PF}) de l'art antérieur identifié par une puissance de 60W/m à 10°C.

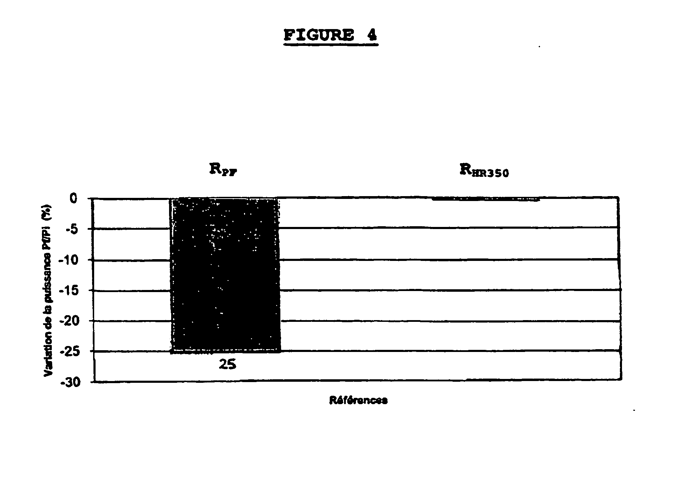

Les valeurs ainsi obtenues sont représentées sous la forme du graphique de la figure 4. On peut observer que le câble fabriqué avec le matériau selon l'invention (R_{HR350}) maintient sa puissance au gré du temps et est par conséquent plus stable au vieillissement que le câble à base de polymère fluoré de l'art antérieur (R_{PF}).

### Exemple 5 : Energie calorifique délivrée

Les câbles préparés selon les exemples 2 et 3 sont placés dans une gaine en laine de verre puis chauffés jusqu'au moment où leur température atteint un seuil maximal qui est mesuré et qui correspond à la température auto-générée.

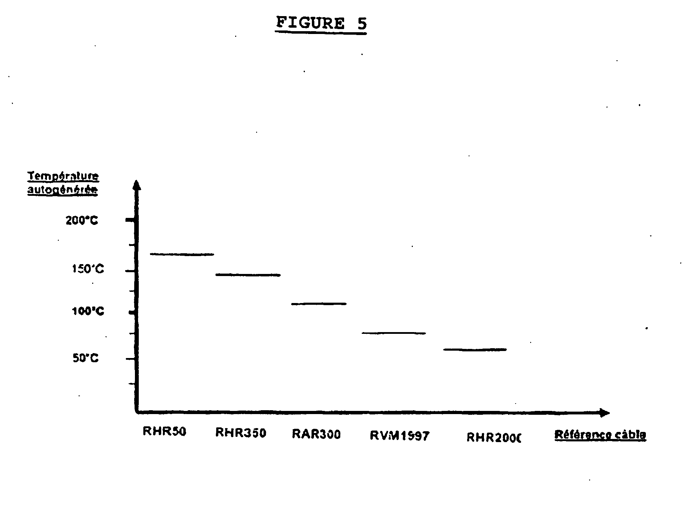

Les résultats sont présentés sur le graphique de la figure 5.

En modifiant la nature et la quantité de l'élastomère thermoplastique à base de polyester-ester ou de polyester-éther, on voit donc qu'il est possible avec les matériaux de l'invention d'auto-générer une température bien déterminée pouvant aller au-delà de 100°C. Cet aspect s'avère important lorsqu'on veut développer des produits pour des applications demandant une température spécifique.

Bien que la présente invention ait été décrite ci-dessus par le biais d'exemples de ses modes de réalisation préférées, il est entendu qu'elle peut être modifiée sans se détourner de l'invention telle que définie dans les revendications annexées.

## Revendications

1. Matériau à comportement CTP (Coefficient de Température Positif) entrant dans la fabrication de structures de câbles auto-régulants, ledit matériau étant un alliage de polymères compatibles **caractérisé en ce qu'** il comprend, les pourcentages étant exprimés en poids total du matériau :
- de 5 à moins de 20% d'au moins une polyoléfine polaire,
- de 60 à 90% d'au moins un copolymère élastomère thermoplastique à base de polyester-ester ou de polyester-éther, et
- de 5 à 20% d'une charge conductrice,
ledit matériau étant dépourvu de composés fluorés.

2. Matériau selon la revendication 1, **caractérisé en ce que** ladite polyoléfine polaire, éventuellement chargée totalement ou partiellement, est choisie dans le groupe comprenant les copolymères d'éthylène/acétate de vinyle chargés, les copolymères d'éthylène/acrylate d'alkyle en C₁-C₆ chargés, ou leurs mélanges, de préférence un copolymère d'éthylène/acrylate d'éthyle (EEA) ou un copolymère d'éthylène/acrylate de méthyle (EMA) et plus préférentiellement un copolymère d'éthylène/acrylate d'éthyle (EEA) chargé avec du noir de carbone.

3. Matériau selon la revendication 1 ou 2, **caractérisé en ce que** ledit copolymère élastomère thermoplastique à base de polyester-ester ou de polyester-éther a une dureté Shore D comprise entre 25 et 82.

4. Matériau selon l'une quelconque des revendications 1 à 3, **caractérisé en ce que** la plage de température de fonctionnement sous tension est comprise entre -20°C à 150°C et la plage de température de fonctionnement hors tension est comprise entre -20°C et 190°C.

5. Matériau selon l'une des quelconques revendications 1 à 4, **caractérisé en ce que** sa température de coupure est supérieure à 70°C de préférence d'environ 100 à 240°C.

6. Matériau selon l'une quelconque des revendications 1 à 5, **caractérisé en ce qu'**il est stable au vieillissement.

7. Matériau selon l'une quelconque des revendications 1 à 6, **caractérisé en ce qu'**il est stable thermiquement, permettant de conserver ses propriétés jusqu'à des températures de pointes de 190°C.

8. Utilisation du matériau selon l'une quelconque des revendications 1 à 7 dans la fabrication de structures autorégulantes, choisies dans le groupe comprenant un câble autorégulant, d'un tube chauffant, d'une résistance électrique variable en fonction de la température.

9. Structure autorégulante, notamment un câble autorégulant, un tube chauffant, une résistance électrique variable en fonction de la température, **caractérisée en ce qu'**elle est composée d'un matériau, selon l'une quelconque des revendications 1 à 7.

10. Câble autorégulant **caractérisé en ce qu'**il comprend au moins deux conducteurs électriques autour desquels est extrudé un matériau, selon l'une quelconque des revendications 1 à 7.

11. Procédé de fabrication d'une structure autorégulante, comprenant un matériau selon l'une quelconque des revendications 1 à 7, **caractérisé en ce qu'**il comprend les étapes dans lesquelles :
- on mélange à chaud, c'est-à-dire d'environ 220 à 280°C, les pourcentages étant exprimés en poids total du matériau
- de 5 à moins de 20% d'au moins une polyoléfine polaire,
- de 60 à 90% d'au moins un copolymère élastomère thermoplastique à base de polyester-ester ou de polyester-éther, et
- de 5 à 20% d'une charge conductrice,
le tout dans une extrudeuse bi-vis ou un co-malaxeur Buss,
- on extrude le mélange homogène ainsi obtenu en joncs,
- on coupe les joncs formés afin d'obtenir des granulés, et
- on introduit les granulés dans une extrudeuse pour former la structure dans laquelle est inséré au moins deux conducteurs électriques.

12. Procédé de fabrication d'un câble autorégulant, comprenant un matériau selon l'une quelconque des revendications 1 à 7, **caractérisé en ce qu'**il comprend les étapes dans lesquelles :
- on mélange à chaud, c'est-à-dire d'environ 220 à 280°C, les pourcentages étant exprimés en poids total du matériau
- de 5 à moins de 20% d'au moins une polyoléfine polaire,
- de 60 à 90% d'au moins un copolymère élastomère thermoplastique à base de polyester-ester ou de polyester-éther, et
- de 5 à 20% d'une charge conductrice,
le tout dans une extrudeuse bi-vis ou un co-malaxeur Buss,
- on extrude le mélange homogène ainsi obtenu en joncs,
- on coupe les joncs formés afin d'obtenir des granulés, et
- on introduit les granulés dans une extrudeuse pour former le câble dans lequel est inséré au moins deux conducteurs électriques.

## Claims

1. Material with PTC (Positive Temperature Coefficient) behaviour used in the production of self-regulating cable structures, said material being a compatible polymer alloy **characterised in that** it comprises, the percentages being expressed by total material weight:
- 5 to less than 20% of at least one polar polyolefin,
- 60 to 90% of at least one polyester-ester or polyester-ether-based thermoplastic elastomer copolymer, and
- 5 to 20% of a conductive filler,
said material being devoid of fluorinated compounds.

2. Material according to claim 1, **characterised in that** said polar polyolefin, optionally totally or partially filled, is selected from the group comprising filled ethylene/vinyl acetate copolymers, filled ethylene/C₁-C₆ alkyl acrylate copolymers, or mixtures thereof, preferably an ethylene/ethyl acrylate (EEA) copolymer or an ethylene/methyl acrylate copolymers and more preferentially an ethylene/ethyl acrylate (EEA) copolymer filled with carbon black.

3. Material according to claim 1 or 2, **characterised in that** said polyester-ester or polyester-ether-based thermoplastic elastomer copolymer has a Shore D hardness between 25 and 82.

4. Material according to any of claims 1 to 3, **characterised in** the live operating temperature range is between -20°C and 150°C and the off-load operating temperature range is between -20°C and 190°C.

5. Material according to any of claims 1 to 4, **characterised in that** the cut-off temperature thereof is greater than 70°C, preferably approximately 100 to 240°C.

6. Material according to any of claims 1 to 5, **characterised in that** it is stable in terms of ageing.

7. Material according to any of claims 1 to 6, **characterised in that** it is heat-stable, capable of preserving the properties thereof up to peak temperatures of 190°C.

8. Use of the material according to any of claims 1 to 7 in the production of self regulating structures, selected from the group comprising a self-regulating cable, heating tube, temperature-variable electrical resistor.

9. Self-regulating structure, particularly a self-regulating cable, heating tube, temperature-variable electrical resistor, **characterised in that** it is comprised of a material according to any of claims 1 to 7.

10. Self-regulating cable **characterised in that** it comprises at least two conducting wires about which a material according to any of claims 1 to 7 is extruded.

11. Method for producing a self-regulating structure, comprising a material according to any of claims 1 to 7, **characterised in that** it comprises steps wherein:
- at a hot temperature, i.e. approximately 220 to 280°C, the percentages being expressed by total material weight
- 5 to less than 20% of at least one polar polyolefin,
- 60 to 90% of at least one polyester-ester or polyester-ether-based thermoplastic elastomer copolymer, and
- 5 to 20% of a conductive filler,
are mixed together in a dual-screw extruder or a Buss co-mixer,
- the homogenous mixture obtained is extruded into rods,
- the rods formed are cut to obtain granules, and
- the granules are introduced into an extruder to form the structure wherein at least two conducting wires are introduced.

12. Method for producing a self-regulating cable, comprising a material according to any of claims 1 to 7, **characterised in that** it comprises steps wherein:
- at a hot temperature, i.e. approximately 220 to 280°C, the percentages being expressed by total material weight
- 5 to less than 20% of at least one polar polyolefin,
- 60 to 90% of at least one polyester-ester or polyester-ether-based thermoplastic elastomer copolymer, and
- 5 to 20% of a conductive filler,
are mixed together in a dual-screw extruder or a Buss co-mixer,
- the homogenous mixture obtained is extruded into rods,
- the rods formed are cut to obtain granules, and
- the granules are introduced into an extruder to form the structure wherein at least two conducting wires are introduced.

## Patentansprüche

1. Material mit PTC-Verhalten (Positiver Temperaturkoeffizient), das bei der Herstellung von selbstregulierenden Kabelstrukturen eingebracht wird, wobei das Material eine Legierung kompatibler Polymere ist, **dadurch gekennzeichnet, dass** es umfasst, wobei die Prozentangaben als Gesamtgewicht des Materials ausgedrückt sind:
- von 5 bis weniger als 20% mindestens eines polaren Polyolefins, - von 60 bis 90% mindestens eines thermoplastischen Copolymer-Elastomers auf der Basis von Polyester-Ester oder von Polyester-Ether, und
- von 5 bis 20% einer leitfähigen Ladung,
wobei das Material frei von fluorierten Verbindungen ist.

2. Material gemäß Anspruch 1, **dadurch gekennzeichnet, dass** das polare Polyolefin, das gegebenenfalls vollständig oder teilweise geladen ist, aus der Gruppe, umfassend geladene Ethylen/Vinylacetat-Copolymere, geladene Ethylen/Alkyl-C₁-C₆-acrylat-Copolymere oder deren Mischungen, bevorzugt ein Ethylen/Ethylacrylat- (EEA) Copolymer oder ein Ethylen/Methylacrylat- (EMA) Copolymer und noch stärker bevorzugt ein geladenes Ethylen/Ethylacrylat- (EEA) Copolymer, das mit Ruß beladen ist, ausgewählt ist.

3. Material gemäß Anspruch 1 oder 2, **dadurch gekennzeichnet, dass** das thermoplastische Copolymer-Elastomer auf der Basis von Polyester-Ester oder von Polyester-Ether eine Shore D-Härte zwischen 25 und 82 aufweist.

4. Material gemäß einem der Ansprüche 1 bis 3, **dadurch gekennzeichnet, dass** der Temperaturbereich beim Betrieb unter Spannung zwischen -20°C bis 150°C ist und der Temperaturbereich beim Betrieb ohne Spannung zwischen -20°C und 190°C ist.

5. Material gemäß einem der Ansprüche 1 bis 4, **dadurch gekennzeichnet, dass** seine Bruchtemperatur größer als 70°C, bevorzugt ungefähr 100 bis 240°C ist.

6. Material gemäß einem der Ansprüche 1 bis 5, **dadurch gekennzeichnet, dass** es alterungsbeständig ist.

7. Material gemäß einem der Ansprüche 1 bis 6, **dadurch gekennzeichnet, dass** es thermisch stabil ist, was es gestattet, seine Eigenschaften bis zu Spitzentemperaturen von 190°C zu bewahren.

8. Verwendung des Materials gemäß einem der Ansprüche 1 bis 7 bei der Herstellung von selbstregulierenden Strukturen, ausgewählt aus der Gruppe, umfassend ein selbstregulierendes Kabel, ein Heizrohr, einen elektrischen Widerstand, der temperaturabhängig variabel ist.

9. Selbstregulierende Struktur, insbesondere ein selbstregulierendes Kabel, ein Heizrohr, ein elektrischer Widerstand, der temperaturabhängig variabel ist, **dadurch gekennzeichnet, dass** sie aus einem Material gemäß einem der Ansprüche 1 bis 7 besteht.

10. Selbstregulierendes Kabel, **dadurch gekennzeichnet, dass** es mindestens zwei elektrische Leiter, um die herum ein Material gemäß einem der Ansprüche 1 bis 7 extrudiert ist, umfasst.

11. Verfahren zur Herstellung einer selbstregulierenden Struktur, umfassend ein Material gemäß einem der Ansprüche 1 bis 7, **dadurch gekennzeichnet, dass** es die Schritte umfasst, in denen:
- man bei Wärme, das heißt ungefähr von 220 bis 280°C, wobei die Prozentangaben als Gesamtgewicht des Materials ausgedrückt sind, mischt:
- von 5 bis weniger als 20% mindestens eines polaren Polyolefins,
- von 60 bis 90% mindestens eines thermoplastischen Copolymer-Elastomers auf der Basis von Polyester-Ester oder von Polyester-Ether, und
- von 5 bis 20% einer leitfähigen Ladung,
das Ganze in einem Doppelschneckenextruder oder einer Buss Co-Mischmaschine,
- man die so erhaltene homogene Mischung zu Strängen extrudiert,
- man die geformten Stränge schneidet, um Granulat zu erhalten und
- man das Granulat in einen Extruder einführt, um die Struktur zu formen, in die mindestens zwei elektrische Leiter eingefügt werden.

12. Verfahren zur Herstellung eines selbstregulierenden Kabels, umfassend ein Material gemäß einem der Ansprüche 1 bis 7, **dadurch gekennzeichnet, dass** es die Schritte umfasst, in denen:
- man bei Wärme, das heißt ungefähr von 220 bis 280°C, wobei die Prozentangaben als Gesamtgewicht des Materials ausgedrückt sind, mischt:
- von 5 bis weniger als 20% mindestens eines polaren Polyolefins,
- von 60 bis 90% mindestens eines thermoplastischen Copolymer-Elastomers auf der Basis von Polyester-Ester oder von Polyester-Ether, und
- von 5 bis 20% einer leitfähigen Ladung,
das Ganze in einem Doppelschneckenextruder oder einer Buss Co-Mischmaschine,
- man die so erhaltene homogene Mischung zu Strängen extrudiert,
- man die geformten Stränge schneidet, um Granulat zu erhalten und
- man das Granulat in einen Extruder einführt , um das Kabel zu formen, in das mindestens zwei elektrische Leiter eingefügt werden.
